# EUROPÄISCHE PATENTANMELDUNG

(11) **EP 2 402 624 A2**
(43) Veröffentlichungstag der Anmeldung: **04.01.2012**
(21) Anmeldenummer: 11005296.6
(22) Anmeldetag: 29.06.2011
(51) Int. Cl.: F16D 48/06

(54) **Verfahren zum Regeln eines Funktionswerts einer hydrodynamischen Komponente**

(30) Priorität: 29.06.2010 DE 102010025518
(71) Anmelder: Voith Patent GmbH, 89522 Heidenheim (DE)
(72) Erfinder: Schlosser, Markus, 73479 Ellwangen (DE); Lührs, Thorsten, 74592 Kirchberg (DE)
(74) Vertreter: Weitzel, Wolfgang

(57) **Zusammenfassung**

Ein Verfahren dient zum Regeln eines Funktionswerts einer hydrodynamischen Komponente nach einer Führungsgröße. Die Führungsgröße wird über eine Vorsteuerung aus einem zumindest indirekt mit einem vorgegebenen Funktionswert korrespondierenden Wert vorgesteuert. Der Funktionswert wird über einen ersten Regler auf die Führungsgröße geregelt, Über ein Messglied erfolgt eine Rückkopplung eines erfassten Funktionswerts. Der erfasste Funktionswert wird über die Vorsteuerung zu einer mit der Führungsgröße korrespondierenden Korrekturgröße gewandelt. Eine eventuelle Abweichung der Korrekturgröße von der Führungsgröße wird über einen zweiten Regler ausgeregelt. Lernwerte werden aus der Differenz der erfassten Funktionsgröße und der vorgegebenen Funktionswerte immer dann ermittelt, wenn eine Abweichung der Korrekturgröße von der Führungsgröße vorliegt. Die Lernwerte werden in Abhängigkeit von bei der Ermittlung vorliegenden Rändbedingungen gespeichert oder zur Veränderung eines mehrdimensionalen Korrekturpolynoms verwendet. Die Führungsgröße und/oder die Korrekturgröße werden mit den gespeicherten Lernwerten oder dem mehrdimensionalen Korrekturpolynom in Abhängigkeit von den vorliegenden Randbedingungen additiv und/oder multiplikativ korrigiert.

## Beschreibung

Die Erfindung betrifft ein Verfahren zum Regeln eines Funktionswerts einer hydrodynamischen Komponente nach einer Führungsgröße gemäß dem Oberbegriff des Anspruchs 1.

Hydrodynamische Komponenten, wie beispielsweise Kupplungen, Retarder oder auch hydrodynamische Wandler, sind aus dem allgemeinen Stand der Technik bekannt. Funktionswerte derartiger hydrodynamischer Komponenten, beispielsweise ein übertragenes Drehmoment oder im Falle eines Retarders ein Bremsmoment, werden häufig durch ein Antriebssystem, beispielsweise einen Industrieantrieb oder ein Fahrzeug, vorgegeben. Die hydrodynamische Komponente muss dann beispielsweise über ihren Stelldruck, über einen Volumenstrom oder eine andersartige Einstellung so geregelt werden, dass der Funktionswert sich in der gewünschten Art und Weise einstellt.

Aus der deutschen Offenlegungsschrift DE 10 2004 048 121 A1 ist ein Verfahren zum Anpassen einer Betriebsweise einer hydrodynamischen Komponente bekannt, bei der die Führungsgröße über eine Vorsteuerung aus einem Kennfeld vorgesteuert wird und bei dem eine Regelung eines Funktionswerts auf die Führungsgröße erfolgt. Dabei ist das Verfahren gemäß der oben genannten deutschen Offenlegungsschrift als selbstlernendes Verfahren so ausgebildet, dass eine Soll-Kennlinie oder ein Soll-Kennfeld während des Betriebs aufgrund sich ändernder Werte entsprechend angepasst wird, um die Genauigkeit der Regelung zu verbessern. Das Kennfeld wird dazu gespeichert und ständig durch sich ändernde Werte angepasst und erneut gespeichert, sodass ein sich während des Betriebs der hydrodynamischen Komponente adaptiv anpassendes Kennfeld entsteht. Dies ist relativ aufwändig und benötigt vergleichsweise viel Rechnerkapazität für den Lernprozess, sodass die Regelung letztlich zwar exakter, gegebenenfalls jedoch langsamer wird.

Aus dem weiteren Stand der Technik in Form der DE 102 00 946 A1 ist es aus einem anderen Technologiebereich bekannt, dass eine adaptive Vorsteuerung des Zündzeitpunkts für Brennkraftmaschinen mit einem Lernalgorithmus versehen werden kann. Der Lernalgorithmus nutzt dabei anders als der oben genannte Stand der Technik kein System zur Speicherung von sich ändernden Werten, sondern nutzt ein neuronales Netz, um die Lernwerte unter Veränderung eines mehrdimensionalen Korrekturpolynoms abzubilden und so eine selbstlernende Funktion zu realisieren. Dies spart gegenüber der eingangs genannten Art Speicherplatz, erhöht die benötigte Rechnerkapazität aber weiter, sodass auch hier eine eher langsame Regelung zu erwarten ist.

Es ist nun die Aufgabe der hier vorliegenden Erfindung, ein Verfahren zum Regeln eines Funktionswerts einer hydrodynamischen Komponente nach einer Führungsgröße zu schaffen, welche den Funktionswert schnell und effizient regelt und durch eine selbstlernende Funktionalität eine ständige Verbesserung der Regelung während des Betriebs ermöglicht.

Erfindungsgemäß wird diese Aufgabe durch das Verfahren mit den Merkmalen im kennzeichnenden Teil des Anspruchs 1 gelöst. Weitere vorteilhafte Ausgestaltungen des erfindungsgemäßen Verfahrens ergeben sich dabei aus den hiervon abhängigen Verfahrensansprüchen.

Das erfindungsgemäße Verfahren nutzt einen Aufbau mit einem ersten Regler, welcher den Funktionswert der hydrodynamischen Komponente, beispielsweise das Bremsmoment bei einem hydrodynamischen Retarder oder das übertragene Drehmoment bei einer hydrodynamischen Kupplung, auf die Führungsgröße regelt. Daneben ist ein zweiter Regler vorhanden, über welchen ein über ein Messglied erfasster Wert in den Regelkreis zurückgekoppelt ist. Dieser ist am Eingang des zweiten Reglers mit dem Sollwert beziehungsweise der Führungsgröße so verknüpft, dass am zweiten Regler nur dann ein Wert ankommt, wenn die zurückgekoppelte Größe, welche nachfolgend als Korrekturgröße bezeichnet wird, von der Führungsgröße abweicht. Um dies zu vereinfachen ist dabei typischerweise darauf zu achten, dass die Korrekturgröße und die Führungsgröße korrespondierend angelegt sind, beispielsweise beide in der Form eines Stelldrucks, welcher sich aus den Sollvorgaben und dem über das Messglied erfassten Funktionswert über ein Kennfeld aus einer Vorsteuerung ergeben.

Eine eventuelle Abweichung der Korrekturgröße von der Führungsgröße wird dann über diesen zweiten Regler ausgeregelt. Immer wenn der zweite Regler eine solche Abweichung ausregelt, wird nun außerdem ein Lernwert aus der Differenz der erfassten Funktionswerte und der vorgegebenen Funktionswerte ermittelt. Die Lernwerte werden in Abhängigkeit von den bei der Ermittlung vorliegenden Randbedingungen gespeichert oder zur Veränderung eines mehrdimensionalen Korrekturpolynoms verwendet. Die Lernwerte fließen also entweder in einen Speicher, beispielsweise in der Form einer Speichermatrix, oder ein neuronales Netz ein. Die Führungsgröße und/oder die Korrekturgröße werden dann mit den Lernwerten beziehungsweise im Falle eines neuronalen Netzes mit dem mehrdimensionalen Korrekturpolynom in Abhängigkeit der aktuell vorliegenden Randbedingungen additiv und/oder multiplikativ korrigiert. Die Lernwerte können dabei so angelegt sein, dass diese über eine Multiplikation mit der Führungsgröße und/oder mit der Korrekturgröße diese beispielsweise in ihrer Steigung anpassen. Auch ein Offset, also eine Nullpunktverschiebung durch die Addition eines positiven oder negativen Werts, ist ergänzend oder alternativ hierzu möglich.

Über einen längeren Betriebszeitraum des Verfahrens hinweg entsteht so, ausgehend von leeren Lernwerten, nach und nach ein eingelerntes Ergebnis für die jeweiligen Randbedingungen. Randbedingungen für eine hydrodynamische Komponente, beispielsweise einen hydrodynamischen Retarder oder eine hydrodynamische Kupplung, könnten dabei beispielsweise die Temperatur des Arbeitsmediums, Drücke im Schmierölbereich, Vorratsdrücke im Bereich des Arbeitsmediums oder im Bereich eines Drucklufttanks zur Steuerung sein, ebenso wie Volumenströme oder Druckdifferenzen. Auch andere Randbedingungen wie Umgebungstemperatur, Viskosität des Arbeitsmediums etc. können entsprechend berücksichtigt werden.

Das erfindungsgemäße Verfahren bietet nun den Vorteil, dass ein Kennfeld für die Vorsteuerung in an sich bekannter Art und Weise aus experimentellen Daten einiger Prototypen erstellt oder aus Simulationsergebnissen übernommen werden kann. Dieses Kennfeld der Vorsteuerung wird dabei unverändert belassen und kann im Laufe des Betriebs über die Lernwerte je nach Bedarf multiplikativ und/oder additiv bei den jeweils vorliegenden Randbedingungen korrigiert werden. Die Abweichungen aufgrund von Fertigungstoleranzen der eingesetzten Bauteile der hydrodynamischen Komponente können dann ebenso wie Verschleißerscheinungen im Betrieb korrigiert werden. Dadurch werden die Regelzeiten entsprechend verkürzt, da die Ausgaben der Vorsteuerung nicht oder nur um einen sehr kleinen Betrag korrigiert werden müssen. Der Aufbau ermöglicht so eine Beschleunigung der Regelzeit.

Der erste Regler beim erfindungsgemäßen Verfahren kann dabei als Proportionalregler ausgebildet werden. Dieser ist einfach und entsprechend schnell. Eventuelle Abweichungen der Korrekturgröße von der Führungsgröße werden dabei über den zweiten Regler ausgeregelt, welcher dann bevorzugt als Integral-Differential-Regler ausgebildet wird. Ein solcher Integral-Differential-Regler lässt sich besonders einfach und effizient über die Verwendung eines PID (Proportional-Integral-Differential)-Reglers realisieren, bei dem der P-Anteil auf Null gesetzt ist. Alternative Ausgestaltungen der Regler, beispielsweise in Form von zwei PID-Reglern, reinen PI-Reglern oder Ähnlichem ist dabei selbstverständlich ebenso denkbar.

In einer besonders günstigen Ausgestaltung des erfindungsgemäßen Verfahrens ist es dabei vorgesehen, dass das Ermitteln der Lernwerte immer genau dann erfolgt, wenn der zweite Regler mit maximaler Regelabweichung zum Ausregeln der Abweichung der Korrekturgröße von der Führungsgröße startet. In diesem Fall liegt die maximale Abweichung des gewünschten Sollwerts vom über das Messglied erfassten Istwert vor. Der Start der Regelung des zweiten Reglers kann also Trigger für die Erfassung der Differenz für die Lernfunktionalität verwendet werden. Damit lässt sich sicherstellen, dass ein richtiges, sehr schnelles Einlernen erfolgt, da immer die maximale Abweichung zur Ermittlung und Verarbeitung im Lernprozess zur Verfügung steht.

In einer weiteren Ausgestaltung des erfindungsgemäßen Verfahrens kann es ferner vorgesehen sein, dass der Aufbau so ausgebildet ist, dass bei einer Anzahl von weniger als 15 Randbedingungen die Lernwerte gespeichert werden, während diese bei einer Anzahl von 15 oder mehr Randbedingungen zur Veränderung eines mehrdimensionalen Korrekturpolynoms verwendet werden. Bei einer überschaubaren Zahl von Randbedingungen, beispielsweise weniger als 15 Randbedingungen, insbesondere lediglich zwei bis fünf Randbedingungen, ist die Speicherung der Lernwerte in einer mehrdimensionalen Matrix einfach und effizient möglich. Mit moderatem Aufwand an Speicherplatz wird so ein sehr einfaches System realisiert, bei dem aufgrund der vergleichweise kleinen Matrix innerhalb einer kurzen Betriebsdauer damit zu rechnen ist, dass für jede der vorgegebenen Randbedingungen ein oder mehrere Lernwerte erfasst beziehungsweise erzeugt worden sind. Bei einer Anzahl von sehr vielen Randbedingungen, beispielsweise 15 oder mehr Randbedingungen, ist dies entsprechend aufwändiger, einerseits hinsichtlich des Speicherplatzes und andererseits hinsichtlich der Zeit die benötigt wird, bis jede der vorgegebenen Randbedingungen wenigstens einmal angefahren worden ist. In diesem Fall bietet sich die Verwendung eines neuronalen Netzes, wie es beispielsweise aus dem eingangs genannten Stand der Technik bekannt ist, an. Über ein mehrdimensionales Korrekturpolynom kann so eine Beschleunigung der Lernphase erreicht werden, da das Korrekturpolynom bereits nach einigen angefahrenen Randbedingungen auf geeignete Werte im Bereich von bisher noch nicht angefahrenen Randbedingungen rückschließen lässt.

In einer sehr günstigen Weiterbildung des erfindungsgemäßen Verfahrens ist es ferner vorgesehen, dass das Ermitteln der Lernwerte nur dann erfolgt, wenn der/die Änderungsgradient/-en der Randbedingungen innerhalb von vorgegebenen Grenzgradienten liegt/liegen. Diese Ausgestaltung des erfindungsgemäßen Verfahrens in der Art, dass nur dann gelernt wird, wenn der Änderungsgradient der Randbedingung beziehungsweise die Änderungsgradienten der Randbedingungen sich moderat ändern, hat dabei den Vorteil, dass im Falle von schnellen Änderungen der Randbedingungen, beispielsweise einem sehr schnellen Hochspringen der Drehzahl, nicht gelernt wird. Da in diesen Situationen nicht von einem stabilen Betrieb ausgegangen werden kann, sondern dass hier schlagartig auf dynamische Anforderungen des Benutzers reagiert werden muss, ist dies zielführend für ein schnelles und zuverlässiges Lernen. In diesen Situationen macht es daher Sinn, über eine Abfrage des Änderungsgradienten der Randbedingungen das Lernen immer dann auszuschließen, wenn die Änderung extrem schnell erfolgt, der Änderungsgradient also entsprechend groß ist.

In einer sehr vorteilhaften Ausgestaltung des erfindungsgemäßen Verfahrens ist es außerdem vorgesehen, dass vor und/oder nach dem ersten und/oder zweiten Regler durch ein Sonderfunktionswert die Korrekturgröße und/oder die Führungsgröße additiv und/oder multiplikativ beeinflusst wird. Ein solcher Sonderfunktionswert kann beispielsweise so zur Führungsgröße und/oder Korrekturgröße hinzugefügt werden, dass diese konstant beziehungsweise Null ist, um das Lernen bewusst zu unterdrücken. Dies kann beispielsweise innerhalb der Startphase des Systems sinnvoll sei, da bei entsprechend kaltem Arbeitsmedium Schwankungen in den Werten auftreten, welche für den stationären Betrieb nicht typisch sind und dadurch Lernwerte erzeugen, welche ein schnelles Einlernen des Systems eher verzögern als beschleunigen. Daher kann über derartige Sonderfunktionswerte ein Lernen in diesen Phasen beispielsweise ausgesetzt werden. Alternative Anwendungen für die Sonderfunktionswerte würden beispielsweise darin liegen, dass in diesem Fall typischerweise nach einem der Regler eine entsprechende Rampe oder dergleichen direkt vorgegeben wird, wobei hierdurch die Führungsgröße oder Korrekturgröße entsprechend überschrieben und durch diesen vorgegebenen Sonderfunktionswert ersetzt wird. Auch dadurch kann in bestimmten Situationen auf die selbstlernende Funktionalität verzichtet werden. Bei der Verwendung von mehreren Kennfeldern im Bereich der Vorsteuerung kann die Thematik mit dem Sonderfunktionswert auch so ausgestaltet sein, dass nur bestimmte Kennfelder hiervon betroffen sind und andere in der oben beschriebenen Art ohne Beeinflussung durch den Sonderfunktionswert Verwendung finden.

In einer besonders günstigen und vorteilhaften Weiterbildung des erfindungsgemäßen Verfahrens ist es außerdem vorgesehen, dass die Regelung des Funktionswertes auf die Führungsgröße mit höherer Priorität ausgeführt wird, als die Ermittlung und Verarbeitung der Lernwerte. Diese Aufteilung der zur Verfügung stehenden Rechenkapazität so, dass die Regelung Vorrang vor dem Lernen hat, ermöglicht eine sehr schnelle Regelung, ohne dass für die schnelle Regelung relevante Rechenkapazität für die Lernfunktionalität benötigt werden. Diese läuft vielmehr mit niedrigerer Priorität "im Hintergrund" ab und kann so längerfristig die Funktionalität des Verfahrens gemäß der Erfindung effizient unterstützen, ohne im unmittelbaren zeitlichen Einsatz die eigentliche Regelung nennenswert zu bremsen.

In einer sehr vorteilhaften Weiterbildung hiervon kann es dabei vorgesehen sein, dass die der Ermittlung und Verarbeitung der Lernwerte eingeräumte Priorität mit größer werdender Abweichung der Führungsgröße von der Korrekturgröße ansteigt. Dieser Aufbau erlaubt es bei stärkeren Abweichungen dem Lernen eine höhere Priorität einzuräumen, um so schneller Lernwerte zu bekommen, um die Regelung in ihrer Qualität und Geschwindigkeit zu verbessern. Im Umkehrschluss bedeutet dies, dass bei kleiner oder verschwindender Abweichung der Führungsgröße von der Korrekturgröße die komplette Rechenkapazität ausschließlich für die Regelung eingesetzt wird und die Verarbeitung und Ermittlung der Lernwerte eine sehr kleine oder gar keine Priorität erhält.

Wie bereits oben erwähnt, kann es gemäß einer geeigneten Ausgestaltung des erfindungsgemäßen Verfahrens vorgesehen sein, dass die Lernwerte in einer mehrdimensionalen Matrix bei den jeweiligen Randbedingungen gespeichert werden. Ein solcher Aufbau lässt sich in einer vorteilhaften Weiterbildung dahingehend erweitern, dass die in der Matrix zu konkreten Randbedingungen gespeicherten Lernwerte zu einem kontinuierlichen Lernfeld interpoliert werden. Der Aufbau ermöglicht es so, beim Vorliegen bereits einiger weniger Werte, diese entsprechend zu interpolieren, um auch bei Randbedingungen, welche im bisherigen Betrieb noch nicht aufgetreten sind, geeignete Lernwerte vorzuhalten, um die Regelung auch in diesen Situationen zu verbessern.

In einer weiteren günstigen Ausgestaltung des erfindungsgemäßen Verfahrens kann es für den Fall, dass die Lernwerte gespeichert werden, außerdem vorgesehen sein, dass neue gespeicherte Lernwerte bei den jeweiligen Randbedingungen aus den aktuell ermittelten Lernwerten und dem/den zu diesen Randbedingungen bereits gespeicherten Lernwerte(n) ermittelt werden. Die Lernwerte werden also nicht unmittelbar übernommen, sondern mit den bereits vorhandenen älteren Lernwerten unter denselben Randbedingungen verrechnet, um so beispielsweise schlagartige Abweichungen, welche durch Verschleißerscheinungen oder eventuelle Messfehler auftreten können, zu mildern. Dabei kann es zum Beispiel vorgesehen sein, dass der neue Lernwert zu 60 %, der zuvor gespeicherte zu 30 % und der davor gespeicherte zu 10 % in den neu zu speichernden Lernwert mit einfließt.

Alternativ oder ergänzend zu dieser Ausgestaltung des erfindungsgemäßen Verfahrens kann es ferner vorgesehen sein, dass jeder ermittelte Lernwert einer Plausibilitätsprüfung unterzogen wird, wobei unplausible Lernwerte verworfen werden. Eine solche Plausibilitätsprüfung, welche beispielsweise eine Zuordnung des Lernwerts zu einem Toleranzband, welches fest vorgegeben ist, vorsieht, kann verhindern, dass Lernwerte erzeugt und verwendet werden, welche offensichtlich falsch sind, beispielsweise aufgrund eines Messfehlers oder dergleichen. Derartige unplausible Werte werden dann aussortiert und verworfen, um die Lernfunktionalität des erfindungsgemäßen Verfahrens nicht nachteilig zu beeinflussen.

Unabhängig davon, ob die Lernwerte zur Verwendung im erfindungsgemäßen Verfahren gespeichert oder über ein neuronales Netz abgebildet werden, kann es gemäß einer sehr vorteilhaften Weiterbildung des erfindungsgemäßen Verfahrens vorgesehen sein, dass die Lernwerte zu den jeweiligen Randbedingungen als zeitlicher Verlauf abgespeichert werden. Ein solcher zeitlicher Verlauf kann in einer besonders günstigen und vorteilhaften Weiterbildung dabei auch so gespeichert werden, dass lediglich jeder dritte bis siebte, bevorzugt jeder fünfte ermittelte Lernwert gespeichert wird. Damit lässt sich bei einer entsprechend hohen Anzahl an Randbedingungen der Speicherplatz für das zeitliche Mitschreiben der Lernwerte verringern, ohne dass hierdurch funktional ein großer Nachteil entsteht. Über einen solchen zeitlichen Verlauf der Lernwerte kann dann eine Beobachtung der Funktionalität der hydrodynamischen Komponente realisiert werden.

Insbesondere kann gemäß einer vorteilhaften Weiterbildung hiervon eine Warnmeldung ausgegeben werden, wenn der zeitliche Verlauf der Lernwerte vorgegebene Grenzen über- beziehungsweise unterschreitet oder ein vorgegebenes Toleranzband verlässt. In einem solchen Fall ist davon auszugehen, dass über eine längere Betriebsdauer hinweg ein entsprechender Verschleiß im Bereich der hydrodynamischen Komponente aufgetreten ist, welcher eine solche Abweichung des zeitlichen Verlaufs der Lernwerte verursacht hat. Über eine entsprechende Warnmeldung, beispielsweise eine Warnlampe oder dergleichen, kann dann eine Wartung des Systems, eine Suche nach dem aufgetretenen verschlissenen Teil oder dergleichen ausgelöst werden. Bei starken Abweichungen kann es auch zu einem Not-Stopp des mit dem Verfahren geregelten Systems kommen. Dafür könnte beispielsweise das Toleranzband als ein erstes Toleranzband mit einer ersten Warnstufe und ein darüber angeordnetes größeres zweites Toleranzband mit einer zweiten Warnstufe ausgebildet sein. Beim Erreichen der zweiten Warnstufe kann dann ein Not-Stopp ausgelöst werden. Bei Bedarf ließen sich selbstverständlich auch mehr als zwei derartige Warnstufen realisieren.

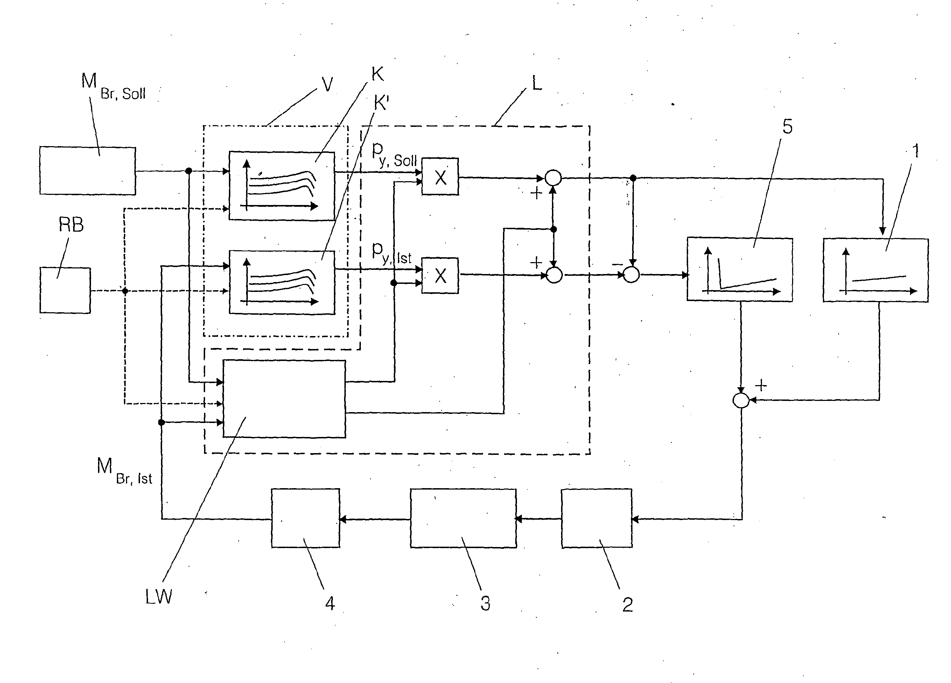

Weitere vorteilhafte Ausgestaltungen des erfindungsgemäßen Verfahrens werden anhand des Ausführungsbeispiels deutlich, welches nachfolgend unter Bezugnahme auf die Figur näher beschrieben wird.

Die einzige beigefügte Figur zeigt dabei ein Regelungsschema, welches das erfindungsgemäße Verfahren in einer besonders vorteilhaften Ausführungsform darstellt.

Anhand der Figur sollen dabei die Abläufe geschildert werden, um die Funktionalität des erfindungsgemäßen Verfahrens in dieser bevorzugten Ausführungsform beispielhaft zu erläutern. Als Beispiel soll dabei ein hydrodynamischer Retarder als hydrodynamische Komponente gewählt sein, der eine entsprechende Sollwert-Vorgabe in Form eines gewünschten angeforderten Bremsmoments M_{Br,Soll} erhalten soll. Dieses Soll-Bremsmoment stellt dabei den Funktionswert dar, welcher geregelt wird. Dieser Funktionswert des Bremsmoments M_{Br,Soll} wird im Bereich einer hier mit einer strichpunktierten Linie umrandeten Vorsteuerung V über wenigstens ein Kennfeld K in eine geeignete Führungsgröße umgesetzt, beispielsweise einen Steltdruck P_{y,Soll}. Diese Führungsgröße gelangt dann über eine später noch näher beschriebene Multiplikationsstelle und eine später noch näher beschriebene Additionsstelle zu einem ersten Regler 1, welcher beispielhaft als Proportionalregler (P-Regler) ausgebildet ist. Über den P-Regler 1 wird der Funktionswert dann auf die Führungsgröße geregelt, sodass über ein Stellglied 2 und eine Regelstrecke 3 die gewünschte Funktionalität der hier nicht dargestellten hydrodynamischen Komponente erzielt wird.

Über ein Messglied 4 wird der so erreichte Funktionswert dann nach der Regelstrecke 3 erfasst, sodass in diesem Bereich der erfasste Funktionswert, hier also das Ist-Bremsmoment M_{Br,Ist} vorliegt. Dieses Ist-Moment wird wieder in ein dem Kennfeld K entsprechendes Kennfeld K' eingespeist und in eine Korrekturgröße umgewandelt, welche mit der Führungsgröße korrespondiert, also beispielsweise ebenfalls ein Stelldruck P_{y,Ist} darstellt. Die aus dem Kennfeld K' der Vorsteuerung V stammende Korrekturgröße durchläuft ebenfalls eine Multiplikation und eine Addition, auf welche später noch näher eingegangen wird, und gelangt dann in den Eingangsbereich eines zweiten Reglers 5, welcher beispielhaft als PID-Regler ausgebildet ist, wobei der P-Anteil hier auf Null gesetzt sein kann, sodass dieser Regler 5 als Integral-Differential-Regler arbeitet. Die Korrekturgröße wird am Eingang des Reglers 5 mit dem negativen Wert der Führungsgröße verrechnet, sodass am Eingang des Reglers 5 lediglich dann ein Signal vorliegt, wenn die Korrekturgröße von der Führungsgröße abweicht. Über den zweiten Regler 5 wird eine solche Abweichung dann ausgeregelt, um die ideale Funktionalität der hydrodynamischen Komponente zu gewährleisten.

Daneben fließen auch entsprechende Randbedingungen mit in das Verfahren ein, welche sich typischerweise im zeitlichen Verlauf des Betriebs ändern. In dem Diagramm sind diese Randbedingungen hier durch die Box RB symbolisiert. Randbedingungen RB können beispielsweise Arbeitsmedientemperaturen, Volumenströme des Arbeitsmediums, die Schmierölversorgung der hydrodynamischen Komponente, Temperaturen in Lagern, Drehzahlen oder Ähnliches ein. Diese Randbedingungen RB gelangen ebenfalls in den Bereich der Vorsteuerung V und können beispielsweise in dem Kennfeld K, K', welches dann als mehrdimensionales Kennfeld ausgebildet ist, beim Erzeugen der Führungsgröße beziehungsweise der Korrekturgröße für die Regelung mit berücksichtigt werden.

Der bisher beschriebene Aufbau umfasst nun zusätzlich eine Lernfunktion L, deren Komponenten in dem gestrichelten Kasten zusammengefasst sind. Diese Lernfunktion arbeitet so, dass in dem Fall, dass eine Abweichung zwischen der Führungsgröße und der Korrekturgröße auftritt, diese Abweichung zum Beginn der Regelung am zweiten Regler 5 als Trigger genutzt wird, um Lernwerte LW zu ermitteln. Diese Lernwerte LW werden in der mit LW bezeichneten Box entsprechend ermittelt und in dem hier dargestellten Ausführungsbeispiel in einer mehrdimensionalen Matrix gespeichert. Analog dazu wäre auch ein entsprechender Einfluss der Lernwerte auf ein mehrdimensionales Korrekturpolynom, letztlich also die Nutzung eines neuronalen Netzes anstelle der Matrix, denkbar. Dies ist insbesondere bei einer sehr großen Zahl von Randbedingungen RB sinnvoll, da dann trotz der großen Zahl an Randbedingungen RB ein schnelles Lernen erzielt werden kann.

Die Lernwerte LW bestehen aus einer Differenz des Soll-Bremsmoments M_{Br,Soll} und des Ist-Bremsmoments M_{Br,Ist}, welches von dem Messglied 4 geliefert wird, zu genau dem Zeitpunkt, indem die Regelung im zweiten Regler 5 startet. Diese Werte werden dann in eine oder mehrere Matrizen zusammen mit den jeweils vorliegenden Randbedingungen RB gespeichert. Die Lernwerte LW stehen dann zur Verfügung, um additiv auf die Führungsgröße und die Korrekturgröße einzuwirken, um beispielsweise einen Nullpunkt, welcher sich aufgrund von Fertigungstolleranzen oder Verschleiß gegenüber dem Kennfeld K, K' verschoben hat, zu korrigieren. Ergänzend oder alternativ hierzu können die Werte auch multiplikativ auf die Führungsgröße und die Korrekturgröße einwirken, um beispielsweise eine sich verändernde Steigung zu korrigieren. Die Korrektur kann dabei prinzipiell nur bei einer der Größen, also der Führungsgröße oder der Korrekturgröße, erfolgen, insbesondere soll sie jedoch bei beiden Größen analog erfolgen, wie dies in der Darstellung der Figur gezeigt ist. Zusätzlich zum Kennfeld K beziehungsweise dem hierzu im Allgemeinen identischen Kennfeld K' wird also eine Matrix oder ein Feld von Lernwerten LW mit in dem System gespeichert, welches eine entsprechende adaptive Anpassung der über die Kennfelder K beziehungsweise K' generierten Führungsgröße beziehungsweise Korrekturgröße an die jeweilige Maschine in der aktuell vorliegenden Situation der Maschine ermöglicht. Damit lässt sich Regelzeit einsparen, da ein Teil der auszuregelnden Abweichung bereits über die selbsterlernende Lernfunktion eliminiert wird. Der Aufbau lässt sich dabei sehr einfach durch eine Softwareprogrammierung erreichen, welche beispielsweise zusätzlich zu den digitalen Reglern 1 und 5 in einen geeigneten Mikrocontroller mit einprogrammiert werden kann.

Im Laufe eines längeren Betriebs der hydrodynamischen Komponente wird die Anzahl der Lernwerte LW bei den einzelnen Randbedingungen dann immer größer, sodass eine sichere und zuverlässige Funktionalität gewährleistet werden kann. Um die Geschwindigkeit der Regler 1, 5 nicht nachteilig zu beeinflussen, kann dabei der Lernfunktion L eine untergeordnete Priorität in den Rechenabläufen des Mikrocontrollers zugewiesen werden, sodass eine schnelle und zügige Regelung immer Vorrang gegenüber der mit geringerer Priorität behandelten Lernfunktion L hat. Um sehr schnell eine sehr große Zahl von Lernwerten LW zu generieren ist es außerdem denkbar, bei der Inbetriebnahme eines Systems dieses entsprechend einzufahren und möglichst viele der benötigten Randbedingungen RB so anzusteuern, dass die entsprechenden Lernwerte LW von dem System generiert werden.

Wie oben bereits erläutert, erlaubt das Abspeichern eines zeitlichen Verlaufs der Lernwerte LW zu den einzelnen Randbedingungen RB außerdem die Überwachung des Zustands der hydrodynamischen Komponente, ein sogenanntes "Conditioned Monitoring". Sobald der zeitliche Verlauf vorgegebene Grenzen überbeziehungsweise unterschreitet oder aus einem vorgegebenen Toleranzband ausbricht, kann eine geeignete Warnmeldung generiert werden, welche einen Verschleiß oder Defekt der hydrodynamischen Komponente anzeigt und eine Wartung derselben erzwingt oder nahelegt.

Die beschriebene Funktionalität lässt sich dabei selbstverständlich nicht nur zur Regelung des Bremsmoments eines Retarders einsetzen, sondern kann anlog zur Regelung des übertragenen Drehmoments einer hydrodynamischen Kupplung oder eines ähnlichen Funktionswerts einer anderen hydrodynamischen Komponente Verwendung finden. Die Anwendung ist dabei sowohl in der industriellen Antriebstechnik als insbesondere auch im Bereich der Antriebstechnik von Fahrzeugen, und hier insbesondere von Nutzfahrzeugen, möglich und sinnvoll.

## Patentansprüche

1. Verfahren zum Regeln eines Funktionswerts einer hydrodynamischen Komponente nach einer Führungsgröße, wobei
1.1 die Führungsgröße über eine Vorsteuerung (V) aus einem zumindest indirekt mit einem vorgegeben Funktionswert korrespondierenden Wert vorgesteuert wird, wonach
1.2 der Funktionswert über einen ersten Regler (1) auf die Führungsgröße geregelt wird, wobei
1.3 über ein Messglied (4) eine Rückkopplung eines erfassten Funktionswerts erfolgt, und wobei
1.4 der erfasste Funktionswert über die Vorsteuerung (V) zu einer mit der Führungsgröße korrespondierenden Korrekturgröße gewandelt wird, **dadurch gekennzeichnet, dass**
1.5 eine evtl. Abweichung der Korrekturgröße von der Führungsgröße über einen zweiten Regler (5) ausgeregelt wird, wobei
1.6 Lernwerte (LW) aus der Differenz der erfassten Funktionswerte und der vorgegeben Funktionswerte immer dann ermittelt werden, wenn eine Abweichung der Korrekturgröße von der Führungsgröße vorliegt, wonach
1.7 die Lernwerte (LW) in Abhängigkeit von bei der Ermittlung vorliegenden Randbedingungen (RB) gespeichert oder zur Veränderung eines mehrdimensionalen Korrekturpolynoms verwendet werden, und
1.8 die Führungsgröße und/oder die Korrekturgröße mit den gespeicherten Lernwerten (LW) oder dem mehrdimensionalen Korrekturpolynom in Abhängigkeit von vorliegenden Randbedingungen (RB) additiv und/oder multiplikativ korrigiert wird/werden.

2. Verfahren nach Anspruch 1, **dadurch gekennzeichnet, dass** das Ermitteln der Lernwerte (LW) immer genau dann erfolgt, wenn der zweite Regler (5) mit maximaler Regelabweichung zum Ausregeln der Abweichung der Korrekturgröße von der Führungsgröße startet.

3. Verfahren nach Anspruch 1 oder 2, **dadurch gekennzeichnet, dass** bei einer Anzahl von weniger als 15 Randbedingungen (RB) die Lernwerte (LW) gespeichert werden, während diese bei einer Anzahl von 15 oder mehr Randbedingungen zur Veränderung eines mehrdimensionalen Korrekturpolynoms verwendet werden.

4. Verfahren nach einem der Ansprüche 1 bis 3, **dadurch gekennzeichnet, dass** das Ermitteln der Lernwerte (LW) nur dann erfolgt, wenn der/die Änderungsgradient/-en der Randbedingungen (RB) innerhalb von vorgegebenen Grenzgradienten liegt/liegen.

5. Verfahren nach einem der Ansprüche 1 bis 4, **dadurch gekennzeichnet, dass** vor und/oder nach dem ersten und/oder zweiten Regler (1, 5) durch ein Sonderfunktionswert die Führungsgröße und/oder die Korrekturgröße additiv und/oder multiplikativ beeinflusst wird.

6. Verfahren nach einem der Ansprüche 1 bis 5, **dadurch gekennzeichnet, dass** die Regelung des Funktionswerts auf die Führungsgröße mit höherer Priorität ausgeführt wird, als die Ermittlung und Verarbeitung der Lernwerte (LW).

7. Verfahren nach Anspruch 6, **dadurch gekennzeichnet, dass** die der Ermittlung und Verarbeitung der Lernwerte (LW) eingeräumte Priorität mit größer werdender Abweichung der Führungsgröße von der Korrekturgröße ansteigt.

8. Verfahren nach einem der Ansprüche 1 bis 7, **dadurch gekennzeichnet, dass** die Lernwerte (LW) in einer mehrdimensionalen Matrix bei den jeweiligen Randbedingungen (RB) gespeichert werden.

9. Verfahren nach Anspruch 8, **dadurch gekennzeichnet, dass** die in der Matrix zu konkreten Randbedingungen (RB) gespeicherten Lernwerte (LW) zu einem kontinuierlichen Lernfeld interpoliert werden.

10. Verfahren nach einem der Ansprüche 1 bis 9, **dadurch gekennzeichnet, dass** im Fall das die Lernwerte (LW) gespeichert werden, der neue gespeicherte Lernwert (LW) bei den jeweiligen Randbedingungen (RB) aus dem aktuell ermittelten Lernwert (LW) und dem/den zu diesen Randbedingungen (RB) bereits gespeicherten Lernwerte/-n (LW) ermittelt wird.

11. Verfahren nach Anspruch 10, **dadurch gekennzeichnet, dass** der ermittelte Lernwert (LW) in den neuen gespeicherten Lernwert (LW) zu 60 % der zuvor gespeicherte Lernwert (LW) zu 30 % und der davor gespeicherte Lernwert (LW) zu 10 % einfließt.

12. Verfahren nach einem der Ansprüche 1 bis 11, **dadurch gekennzeichnet, dass** jeder ermittelte Lernwert (LW) einer Plausibilitätsprüfung unterzogen wird, wobei unplausible Lernwerte (LW) verworfen werden.

13. Verfahren nach einem der Ansprüche 1 bis 12, **dadurch gekennzeichnet, dass** die Lernwerte (LW) zu den jeweiligen Randbedingungen (RB) als zeitlicher Verlauf abgespeichert werden.

14. Verfahren nach Anspruch 13, **dadurch gekennzeichnet, dass** für den zeitlichen Verlauf der Lernwerte (LW) jeder dritte bis siebte, bevorzugt jeder fünfte, ermittelte Lernwert (LW) zu den jeweiligen Randbedingungen (RB) gespeichert wird.

15. Verfahren nach Anspruch 13 oder 14, **dadurch gekennzeichnet, dass** eine Warnung ausgegeben wird, wenn der zeitliche Verlauf der Lernwerte (LW) vorgegebene Grenzen über- bzw. unterschreitet oder ein vorgegebenes Toleranzband verlässt.
